Europäisches Patentamt

European Patent Office

Office européen des brevets

(11) Veröffentlichungsnummer: **0 444 576 A2**

## (12) EUROPÄISCHE PATENTANMELDUNG

(21) Anmeldenummer: 91102745.6

(22) Anmeldetag: 25.02.91

(51) Int. Cl.⁵: **G01V 1/30**

(30) Priorität: 28.02.90 DE 4006173

(43) Veröffentlichungstag der Anmeldung:
04.09.91 Patentblatt 91/36

(84) Benannte Vertragsstaaten:
**AT BE CH DE DK ES FR GB GR IT LI LU NL SE**

(71) Anmelder: **PRAKLA-SEISMOS AG**
**Buchholzer Strasse 100**
**W-3000 Hannover 51(DE)**

(72) Erfinder: **Marschall, Roland, Dr. mont.,**
**Dipl.-Ing.**
**Liasweg 14**
**W-3000 Hannover 91(DE)**

(74) Vertreter: **Meyer, Ludgerus et al**
**Patentanwälte Meyer, Stach, Vonnemann**
**Jungfernstieg 38**
**W-2000 Hamburg 36(DE)**

(54) **Verfahren zur Feststellung kohlenwasserstoffhaltiger Schichten des Untergrundes.**

(57) Es wird ein Verfahren zur Feststellung des Sand-/Ton-Anteiles von Schichten des Untergrundes angegeben, bei dem durch reflexionsseismische Messungen unter Verwendung einer wenigstens Kompressionswellen erzeugenden Quelle unter teilweiser Umwandlung in Scherwellen seismische Daten mit Komponenten in wenigstens zwei Richtungen erhalten werden. Die Erfindung sieht vor, daß die P-Wellenanteile und die Scherwellenanteile in Pseudo- Impedanz-Log-Sektionen umgewandelt werden und daß die derartig erhaltenen Daten sampleweise zur Ermittlung des $V_p/V_s$-Verhältnisses dividiert werden, so daß sich daraus eine Ort/Tiefe- oder Ort/Zeit-Sektion darstellen läßt und als unkalibrierte Pseudo-Gamma-Strahlen-Log-Sektion interpretiert wird. In verbesserter Ausführungsform wird das Verhältnis von $V_p/V_s$ auf vorgegebene Werte der Porosität und des Sand-/Ton-Gehalts des zu untersuchenden Untergrundes normiert und stellt damit Pseudo-Gamma-Strahlen-Log-Sektionen dar, die sonst nur durch Bohrlochmessungen in Bohrungen erhalten werden können.

EP 0 444 576 A2

Rank Xerox (UK) Business Services

Die Erfindung betrifft ein Verfahren zur Feststellung kohlenwasserstoffhaltiger Schichten des Untergrundes nach dem Oberbegriff des Anspruchs 1.

Zur Feststellung von kohlenwasserstoffhaltigen Schichten in sedimentären Becken ist es von besonderer Wichtigkeit, das tatsächliche Sand/Tonverhältnis zu ermitteln. Beispielsweise beruht die Einteilung der oberen Rotliegend-Sedimente im Nordwestdeutschen Becken auf der Korrelation von Gamma Logs an individuellen Bohrungen. Gamma Logs dienen der Erfassung natürlicher oder künstlicher Strahlungsintensität in Bohrlöchern. Die erfaßte Intensität hängt dabei von der Umgebungsstruktur ab. Insbesondere zur Ermittlung des Sand-/Tonverhältnisses und von Gasführungspotentialen hat sich die Verwendung von Gamma Logs bewährt. Allerdings muß zur vollständigen Erfassung eines Beckens eine Vielzahl von Bohrungen niedergebracht sein, um eine ausreichende Meßdichte zu erreichen.

Es sind auch sogenannte Vollwellen-Logs bekannt, die den gesamten akustischen Wellenbereich erfassen, insbesondere die Laufzeiten und Amplituden von Kompressionswellen, Scherwellen und Stoneleywellen. Derartige Logs liefern auswertbare Informationen über Gesteinstypen, Gasbereiche, Porosität, elastische Eigenschaften von Formationen, deren Amplituden und akustische Impedanz. Die Verwendung derartiger Logs erfordert ebenfalls das Vorhandensein einer Vielzahl von Meßbohrungen.

Es wurde auch bereits festgestellt, daß aus dem Geschwindigkeitsverhältnis von Kompressionswellen zu Scherwellen Gesteinseigenschaften abgeleitet werden können. Es wurde nachgewiesen, daß ein enger Zusammenhang zwischen dem Geschwindigkeitsverhältnis der P- und S-Wellen und der Lithologie von Sedimenten besteht. Zusätzlich zeigt das Verhältnis deutliche Abhängigkeiten von der Porenfüllung der Sedimente, der Porengeometrie und der Klüftung. Die Auswertung akustischer Bohrlochmessungen über Zusammenhänge mit der Lithologie sowie petrophysikalische Untersuchungen haben gezeigt, daß Verhältnisse von etwa 1,9 für Kalke, 1,8 für Dolomite und 1,6 - 1,8 für Sandsteine signifikant sind. Insbesondere für Sandsteine hängen die Verhältniswerte von der Porosität ab, wobei die $V_p/V_s$-Werte generell mit der Porosität zunehmen. Bei Verhältnissen von unter 1,6 zwischen $V_p/V_s$ kann in der Regel davon ausgegangen werden, daß derartige Strukturen gasführend sind.

Es ist daher von besonderer Bedeutung, das $V_p/V_s$-Verhältnis einer gegebenen Struktur zu ermitteln und dieses über eine geeignete Kalibrierung in Pseudo-Gamma-Strahlen-Log-Sektionen umzuwandeln.

Der Erfindung liegt die Aufgabe zugrunde, ein Verfahren zur Feststellung des Sand-/Ton-Anteiles der Schichten des Untergrundes anzugeben, das es erlaubt, unter Verwendung reflexionsseismischer Untersuchungen das $V_p/V_s$-Verhältnis einer interessierenden Struktur zu ermitteln und diese Werte in Gamma-Strahlen-Log-Sektionen umzurechnen, ohne daß dazu Meßbohrungen in dem betreffenden Gebiet niedergebracht werden müssen.

Diese Aufgabe wird durch die im Anspruch 1 angegebene Erfindung gelöst. Eine vorteilhafte Weiterbildung der Erfindung ist in einem Unteranspruch angegeben.

Die Erfindung ermöglicht es, mit Hilfe reflexionsseismischer Messungen das $V_p/V_s$-Verhältnis einer interessierenden Struktur zu ermitteln. Hierzu werden wenigstens seismische 2-Komponenten-Daten benötigt. Durch Umwandlung der seimischen Zeitsektionen in Impedanzsektionen unter Anwendung bekannter Inversionsverfahren können die $V_p/V_s$-Verhältnisse numerisch ermittelt werden, so daß eine unmittelbare Aussage über das jeweilige Sand-/Ton-Verhältnis und das Vorhandensein von gasförmigen Kohlenwasserstoffen in einem interessierenden Untergrundsediment gemacht werden kann.

Es ist auch die Beziehung zwischen dem Temperaturverlauf und dem $V_p/V_s$-Verhältnis zur Bestätigung einer gasführenden Schicht bekannt. Es existiert ferner eine Relation zwischen dem Tongehalt eines Sediments und dem radioaktiven Zerfall und dem Wärmefluß. Diese Relation Tongehalt/natürliche Strahlung einerseits und die Relation $V_p/V_s$-Verhältnis/Tongehalt andererseits benutzt die Erfindung, um seimische Daten in Gamma-Strahlen-Log-Sektionen umzuwandeln.

Die Erfindung wird nachstehend anhand eines Ausführungsbeispiels näher erläutert.

Aus Untersuchungen von Eberhart-Phillips et al in Geophysics, Band 54, Nr. 1, S. 82 - 89, ist eine Berechnungsmethode zur Ermittlung von $V_p$ und $V_s$ in Abhängigkeit von Porosität bzw. dem Tongehalt für wassergesättigte Sandsteine folgender Form bekannt:

$$V_p = a_p - b_p \cdot \varnothing - c_p \cdot (C_{cl})^{1/2} + d \cdot f_p \qquad (1)$$

$$V_s = a_s - b_s \cdot \varnothing - c_s \cdot (C_{cl})^{1/2} + d \cdot f_s$$

Hierin bedeuten $\varnothing$ die Porosität und $C_{cl}$ der Tongehalt. Die Konstanten $a_p$, $b_p$, $c_p$, $f_p$, $a_s$, $b_s$, $c_s$, $f_s$ sind in Abhängigkeit vom jeweiligen Sedimentationsbecken und der Formation zu kalibrieren. In dieser Formel entspricht d dem Druckwert, der den Einfluß des aktuellen Lagerstättendrucks bzw. des aktuellen Drucks bei Labormessungen wiedergibt. Die Indizes $_p$ und $_s$ unterscheiden zwischen Longitudinal- und Scherwellen.

Der Tongehalt ist mit dem Meßwert eines Gamma-Strahlen-Logs über die folgende Formel verbunden:

$$(2)$$

$$\Delta J_g = \frac{J_i - J_{Max}}{J_{MIN} - J_{MAX}} = m * C_{cl}{}^n$$

Hierin liegt n zwischen 0,3 und 0,8. $J_i$ gibt den tatsächlichen Gamma Log-Wert an, während $J_{MAX}$ den maximalen Wert und $J_{MIN}$ den minimalen Wert darstellen. Die Konstanten m und n können beispielsweise durch eine Kernanalyse für das betreffende Sedimentationsbecken und die Formation mit Hilfe folgender Formel bestimmt werden:

$$\sum_k (\Delta J_{g,k} - m^*C_{cl,k}{}^n)^2 = MIN! \qquad (3)$$

Der Summationsindex $_k$ kennzeichnet das ausgewählte Teufenintervall. $\Delta J_{g,k}$ ist der Intensitätswert aus dem Gamma-Log in der Teufe k.

Auf diese Weise können die Geschwindigkeitswerte $V_p$ und $V_s$ durch Verwendung folgender Gleichungen ermittelt werden:

$$\sum_k (V_{pk} - a_p + b_p{}^*\emptyset_k + c_p{}^*(C_{clk})^{1/2} - d_k * f_p)^2 = MIN! \qquad (4)$$

$$\sum_k (V_{sk} - a_s + b_s{}^*\emptyset_k + c_s{}^*(C_{clk})^{1/2} - d_k * f_s)^2 = MIN!$$

Die Konstanten $a_p$, $b_p$, $c_p$, $f_p$, $a_s$, $b_s$, $c_s$, $f_s$, m, n in den Formeln 3) und 4) werden unter Verwendung der Methode der kleinsten Quadrate ermittelt.

Die berechneten Geschwindigkeiten $V_p$ und $V_s$ gelten für wassergesättigte Schichten. Im Falle einer Gassättigung sind die $V_p$-Geschwindigkeitswerte unter Verwendung einer Zeitgleichung nach Marschall, 1983 "Verbesserung der seismischen Erkundungsmethoden für die Seismogrammbearbeitung durch Einbeziehung des seismischen Signals", Report BMFT/FB/T/83/230, Fachinformationszentrum Energie, Physik, Mathematik GmbH, Karlsruhe zu korrigieren. Die Korrektur des $V_s$-Geschwindigkeitswertes wird bereits allein durch Angabe des entsprechend der Gasführung korrigierten Dichtewertes erreicht.

Zur Durchführung der Erfindung werden also zunächst 2-Komponenten-Daten unter Verwendung einer P-Wellen-Quelle ermittelt, wobei die $S_v$-Wellen aufgrund einer Umwandlung nahe der Oberfläche oder an entsprechenden Schichtgrenzen entstanden sind. Bei Verwendung von Scherwellen- und Kompressionswellen-Quellen in Verbindung mit 3-Komponenten (P, $S_v$, $S_H$) Registrierung läßt sich das Verfahren weiter verbessern.

Die P-Wellen- und P-$S_v$-Wellen-Sektionen werden in Pseudo-Impedanz-Log-Sektionen gewandelt. Dies wird beispielsweise durch Umwandlung der gemessenen seismischen Zeitsektion in eine sogenannte "zero phase"-Sektion mit anschließender "Spike"-Dekonvolution und nachfolgender generalisierter Born- Inversion numerisch erreicht. Die so ermittelten Impedanz-Sektionen bestehen aus rho$^*V_p$ - bzw. rho$^*V_s$-Daten. Die S-Wellen Impedanz-Sektion wird durch eine Transformation, beispielsweise die TDT-Transformation nach Marschall und Knecht, Simultaneous processing of P- and S-wave data, 48th EAEG-Meeting, 1986, Oostende, Belgium, in den P-Wellenbildraum transformiert. Dann werden die Impedanzwerte der beiden Wellentypen sample für sample dividiert, so daß sich das $V_p/V_s$-Verhältnis für jeden Sampleschritt ergibt. Dieser gibt bereits eine unkalibrierte Aussage über die Pseudo-Gamma-Strahlen-Log-Sektion.

Der Geologe kann hieraus bereits eine lithostratigrafische Interpretation vornehmen. Hierbei ist zu beachten, daß mit steigendem Tongehalt $V_p$ und $V_s$ kleiner werden, jedoch das Verhältnis $V_p/V_s$ ansteigt.

Sofern zusätzliche Informationen vorliegen, z.B. aus Kalibrierpunkten in Form von Vollwellen - Akustik-Logs oder P- und S-Wellen-VSP$_s$ (Vertikalseismikprofile) kann das Ergebnis weiter verbessert werden.

Hierzu wird eine empirische Beziehung zwischen der Porosität $\emptyset$ und dem Tongehalt $C_{cl}$ auf der einen

Seite und den seismischen Geschwindigkeiten $V_p$ und $V_s$ auf der anderen Seite abgeleitet, die einen unmittelbaren Kohlenwasserstoff-Indikator ergibt, der bei sehr kleinen Werten der resultierenden kalibrierten Pseudo-Gamma-Strahlen-Log-Sektion Gas im Reservoir anzeigt. Nach dieser Kalibrierung kann der Geologe die abschließende Interpretation vornehmen, d.h. die aktuellen Sand/Tonanteile ermitteln und lateral korrelieren.

Im Ergebnis werden Pseudo-Gamma-Strahlen-Log-Sektionen aus wenigstens 2-Komponenten-Aufzeichnungen durch seismische Datenverarbeitungsschritte in unkalibrierter oder kalibrierter Form erzeugt. Der Geologe ist mit dem Ergebnis in der Lage, eine bessere Auswertung und eine verbesserte Planung von künftigen Bohrpositionen durchzuführen. Durch Kombination eines üblichen Akustik-Logs mit der aus gemessenen seismischen Daten berechneten Gamma-Strahlen-Log-Sektionen können andererseits die tatsächlichen $V_s$-Geschwindigkeiten errechnet werden. Zusätzliche Vollwellen-Akustik-Logs sind daher nicht mehr zur Berechnung der Scherwellengeschwindigkeiten erforderlich, sofern diese nicht zur Ermittlung von Stoneley- oder Pseudo-Rayleigh-Wellen notwendig sind.

## Patentansprüche

1. Verfahren zur Erstellung von Gamma-Strahlen-Log-Sektionen, insbesondere zur Feststellung kohlenwasserstoffhaltiger Schichten des Untergrundes, oder zur Feststellung des aktuellen Sand-/Tongehaltes von kohlenwasserstoffhaltigen Schichten des Untergrundes, bei dem durch reflexionsseismische Messungen unter Verwendung einer wenigstens Kompressionswellen erzeugenden Quelle mit teilweiser Umwandlung in Scherwellen seismische Daten mit Komponenten in wenigstens zwei Richtungen erfaßt werden, dadurch gekennzeichnet,

   a) daß die P-Wellen-Anteile und die S-Wellen-Anteile, vorzugsweise die aus den P-Wellen resultierenden $S_v$-Wellen-Anteile, in Pseudo-Impedanz-Log-Sektionen $(rho^*V_p)$ $(z)$ und $(rho^*V_s)$ $(z)$ gewandelt werden mit

   rho = Dichte,
   $V_p$ = P-Wellengeschwindigkeit
   $V_s$ = S-Wellengeschwindigkeit und
   z = Tiefe,

   b) daß die $(rho^*V_p)$ $(z)$ und $(rho^*V_s)$ $(z)$- Daten sampleweise zur Ermittlung des $V_p/V_s$-Verhältnisses dividiert werden, und

   c) daß das $V_p/V_s$-Verhältnis als Ort/Tiefe-Sektion oder Ort/ Zeit-Sektion dargestellt wird, und als unkalibrierte Pseudo-Gamma-Strahlen-Log-Sektion interpretiert wird.

2. Verfahren nach Anspruch 1, dadurch gekennzeichnet, daß ferner das $V_p/V_s$-Verhältnis auf vorgegebene Werte der Porosität und des Tongehalts des zu untersuchenden Untergrundes normiert wird, und damit in eine Pseudo-Gamma-Strahlen-Log-Sektion umgewandelt wird.